(19) Europäisches Patentamt
European Patent Office
Office européen des brevets

(11) Veröffentlichungsnummer : **0 146 887**
**B1**

(12) # EUROPÄISCHE PATENTSCHRIFT

(45) Veröffentlichungstag der Patentschrift : **27.05.87**

(51) Int. Cl.⁴ : **C 08 G 63/64**

(21) Anmeldenummer : **84115362.0**

(22) Anmeldetag : **13.12.84**

(54) **Verfahren zur Herstellung von aromatischen Polyestercarbonaten.**

(30) Priorität : **24.12.83 DE 3346945**

(43) Veröffentlichungstag der Anmeldung : **03.07.85 Patentblatt 85/27**

(45) Bekanntmachung des Hinweises auf die Patenterteilung : **27.05.87 Patentblatt 87/22**

(84) Benannte Vertragsstaaten : **DE FR GB IT NL**

(56) Entgegenhaltungen :
**EP-A- 0 036 080**
**EP-A- 0 094 585**
**DE-A- 2 232 877**

(73) Patentinhaber : **BAYER AG**
**Konzernverwaltung RP Patentabteilung**
**D-5090 Leverkusen 1 Bayerwerk (DE)**

(72) Erfinder : **Freitag, Dieter, Dr.**
**Hasenheide 10**
**D-4150 Krefeld 1 (DE)**
Erfinder : **Wulff, Claus, Dr.**
**Richard-Strauss-Strasse 21**
**D-4150 Krefeld 1 (DE)**
Erfinder : **Henes, Gerhard, Dr.**
**Carl-Rumpff-Strasse 19**
**D-5090 Leverkusen 1 (DE)**
Erfinder : **Bottenbruch, Ludwig, Dr.**
**WÖhlerstrasse 5**
**D-4150 Krefeld 1 (DE)**
Erfinder : **Tacke, Peter, Dr.**
**Brandenburger Strasse 12**
**D-4150 Krefeld 1 (DE)**

**EP 0 146 887 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft ein Verfahren zur Herstellung von aromatischen Polyestercarbonaten, bei dem in einer ersten Stufe aus Diarylestern aromatischer Dicarbonsäuren (oder aus den Ausgangsverbindungen dieser Diarylester) und Diphenolen sowie gegebenenfalls Diarylcarbonat durch Umesterung in der Schmelze aromatische Oligoester bzw. Oligoestercarbonate mit Hydroxylendgruppen hergestellt werden und in einer zweiten Stufe diese Oligoester bzw. Oligoestercarbonate mit Phosgen nach dem Phasengrenzflächenverfahren zum Polyestercarbonat kondensiert werden.

Die nach dem erfindungsgemäßen Verfahren erhaltenen Polyestercarbonate besitzen hervorragende Eigenschaften. Aromatische Polyestercarbonate sind bekannt. Sie können beispielsweise durch Schmelzumesterung (gemäß DE-OS 14 95 626 und 22 32 877) hergestellt werden. Nach diesem Verfahren erhält man jedoch keine farblosen Polyestercarbonate, da das Material, besonders am Ende der Polykondensation, thermisch zu stark belastet wird.

Aromatische Polyestercarbonate können auch durch Umsetzung von aromatischen Dicarbonsäuredichloriden mit Diphenolen in tertiären Aminen als Lösungsmittel in Gegenwart von Säureakzeptoren, z. B. gemäß DE-OS 14 20 475 erhalten werden. Die restlose Entfernung des tertiären Amins aus dem Endprodukt ist problematisch. Während der thermoplastischen Verarbeitung neigen diese Produkte ebenfalls zu Verfärbungen.

Die farblich besten aromatischen Polyestercarbonate erhält man nach dem Phasengrenzflächenverfahren aus aromatischen Dicarbonsäuredichloriden, Diphenolaten und Phosgen. Auch dieses Verfahren ist bekannt, z. B. aus EP 10 840 und DE-OS 30 07 934. Das Verfahren erfordert besonders vorgereinigte aromatische Dicarbonsäuredichloride. Deren Handhabung ist dabei schwierig, weil sie bei Raumtemperatur fest und nur begrenzt lagerstabil sind. Metallspuren und Feuchtigkeit müssen sorgfältig ferngehalten werden.

Der Erfindung liegt somit die Erkenntnis zugrunde, daß man durch eine bestimmte Kombination von Elementen des Schmelzumesterungs- und des Phasengrenzflächenverfahrens Polyestercarbonate von hervorragender Eigenfarbe, Thermostabilität und Hydrolysefestigkeit erhält. Polyestercarbonate mit dieser Eingenschaftskombination waren bisher nicht bekannt.

Es ist als besonders überraschend zu werten, daß Verunreinigungen in den technischen Qualitäten der aromatischen Dicarbonsäuren sich bei Polyestercarbonaten, die nach dem erfindungsgemäßen Verfahren hergestellt worden sind, wesentlich weniger störend bemerkbar machen als bei Produkten, die aus den gleichen technischen Dicarbonsäuren, jedoch über die Säuredichloride erhalten worden sind.

Die Eigenschaften der Polyestercarbonate können durch Reinigen der Säuredichloride bzw. -diarylester, beispielsweise durch Destillation, verbessert werden. Es hat sich hierbei gezeigt, daß sich ein bestimmter Reinigungsaufwand beim Reaktionsweg über die Diarylester beim Endprodukt wesentlich günstiger auswirkt als bei Reaktionsführung über die Säuredichloride.

Gegenstand der Erfindung ist ein Verfahren zur Herstellung von aromatischen Polyestercarbonaten mit relativen Lösungsviskositäten von 1,15 bis 3,0 (gemessen an einer Lösung von 0,5 g Polyestercarbonat in 100 ml $CH_2Cl_2$-Lösung bei 25 °C) und mit einem Gehalt an Estergruppen, bezogen auf die Summe von Ester- und Carbonatgruppen, von 7 bis 86 Mol-%, dadurch gekennzeichnet, daß man in einer ersten Stufe Diarylester aromatischer Dicarbonsäuren (oder Gemische aus aromatischen Dicarbonsäuren und Diarylcarbonat) und gegebenenfalls zusätzlich Diarylcarbonat mit 1,01 bis 100 Mol eines Diphenols (pro Mol Diarylester) in der Schmelze gegebenenfalls in Anwesenheit von Katalysatoren, Kettenabbrechern und/oder Verzweigungsmitteln umsetzt, bis ein Oligomeres mit Hydroxylendgruppen, einem Molekulargewicht von 650 bis 25 000 und einem Carbonatgruppengehalt, bezogen auf die Summe von Ester- und Carbonatgruppen, von bis zu 90 Mol-% entstanden ist, und dann in einer zweiten Stufe das Oligomere nach dem Phasengrenzflächenverfahren in Gegenwart tertiärer Amine und/oder quatärer Ammoniumsalze, gegebenenfalls nach Zugabe von Kettenabbrechern und/oder Verzweigungsmitteln, mit Phosgen, gegebenenfalls unter Zusatz von weiterem Diphenol und/oder Dicarbonsäuredichlorid, zum aromatischen Polyestercarbonat kondensiert.

Die Arbeitsweise der ersten Stufe ist grundsätzlich aus DE-OS 22 32 877 und die der zweiten Stufe grundsätzlich aus der DE-OS 30 07 934 bekannt.

In der ersten Stufe können zur Erleichterung der Umsetzung hochsiedende, inerte organische Lösungsmittel mitverwendet werden, beispielsweise Diphenylether und Ditolylether.

In einer besonderen Ausführungsform können die Diphenole auch mit den Ausgangsverbindungen der Diarylester, also mit Gemischen aus aromatischen Dicarbonsäuren und Diarylcarbonaten, umgesetzt werden, wobei die erhaltenen Polyesterblöcke auch in nennenswertem Maß Carbonatgruppen enthalten, falls mehr als 2 Mol Diarylcarbonat pro Mol der aromatischen Dicarbonsäure eingesetzt werden.

Als Katalysatoren für die Schmelzumesterung der ersten Stufe können u. a. verwendet werden: Verbindungen von Ca, Ag, Mg, Zn, Sn, Mn, Fe, Co, Ni, Ti, As, Sb, außerdem Alkali- und Erdalkalihydroxide sowie deren basisch reagierende Salze, z. B. $(BuO)_2$ SnO, $Ti(OBu)_4$, NaOH, Natriumphenolat. Weiterhin kommen als Katalysatoren 5- und 6-gliedrige aromatische Basen mit 1 bis 3 N-Atomen in Betracht, z. B. Imidazol.

Diese Katalysatoren können einzeln oder gemeinsam in Mengen von insgesamt 0,05 bis 3 Gew.-%, bezogen auf Diphenol, eingesetzt werden.

Als Katalysatoren für die zweite Stufe kommen insbesondere in Betracht : Triethylamin, Tributylamin, N-Ethylpiperidin, N-Ethylmorpholin, Tetrabutylammoniumhalogenid, Trimethylbenzylammoniumhalogenid, bevorzugt in Mengen von 0,1 bis 3, insbesondere 0,1 bis 1 Mol-%, bezogen auf Diphenol.

In der zweiten Stufe werden die oligomeren Esterblöcke nach dem Phasengrenzflächenverfahren in Gegenwart von tertiären Aminen bzw. quaternären Ammoniumsalzen als Katalysatoren bei pH 9 bis 14 mit Phosgen gegebenenfalls unter Zusatz von weiterem Diphenol und/oder Dicarbonsäuredichlorid, zum Polyestercarbonat weiterkondensiert. Die Verfahrensweise der zweiten Stufe ist in der DE-OS 30 07 934 beschrieben.

Eine besonders bevorzugte Ausführungsform besteht darin, nur so viel Alkalihydroxid einzusetzen, daß der pH-Wert während der Phosgenierung bei 10 bis 12 gehalten werden kann und daß der Katalysator erst nach der Phosgenierung zugesetzt wird.

Kettenabbrecher zur Begrenzung des Molekulargewichtes können sowohl in der ersten als auch in der zweiten Stufe eingeführt werden. Vorzugsweise erfolgt der Zusatz von Kettenabbrechern nach der Phosgenierung.

Kettenabbrecher, die während der ersten Stufe zugesetzt werden können, sind Monophenole, aromatische und aliphatische Monocarbonsäuren, deren aromatische Ringe bis zu 3 verzweigte und/oder unverzweigte Alkylsubstituenten mit jeweils bis zu 18 C-Atomen tragen können. Die aliphatischen Monocarbonsäuren können bis zu 25 C-Atome enthalten.

Als Kettenabbrecher, die während der zweiten Stufe eingesetzt werden können, kommen alle unsubstituierten und alkylsubstituierten Phenole, deren Chlorkohlensäureester und aromatische Carbonsäurehalogenide in Betracht, die im Text der DE-OS-30 07 934 genannt sind. Bevorzugt werden die im Anspruch der DE-OS-30 07 934 erwähnten Kettenabbrecher. Darüber hinaus können auch unsubstituierte und mit bis zu 3 $C_1$- bis $C_7$-Alkylgruppen substituierte aromatische Monocarbonsäurehalogenide und aliphatische Monocarbonsäurehalogenide mit bis zu 25 C-Atomen verwendet werden.

Kettenverzweiger können schon während der ersten Stufe des erfindungsgemäßen Verfahrens in Form von 3- und höherwertigen Carbonsäuren und Phenolen eingesetzt werden.

Bevorzugte Diphenole für die Herstellung der erfindungsgemäßen aromatischen Polyestercarbonate sind Verbindungen der Formel I

$$HO—Z—OH \qquad (I)$$

worin Z einen zweiwertigen ein- oder mehrkernigen aromatischen Rest mit 6 bis 30 C-Atomen bedeutet, wobei Z derart gebaut ist, daß die beiden OH-Gruppen direkt an je ein C-Atom eines aromatischen Systems gebunden sind.

Besonders bevorzugte Diphenole sind Verbindungen der Formel II

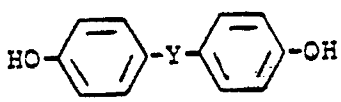

(II)

in der Y eine Einfachbindung, einen Alkylen- oder Alkylidenrest mit 1 bis 7 C-Atomen, einen Cycloalkylen- oder Cycloalkylidenrest mit 5 bis 12 C-Atomen, —O—, —S—,

$$-\underset{\underset{O}{\|}}{S}-, \quad -SO_2- \quad \text{oder} \quad -\underset{\underset{O}{\|}}{C}-$$

bedeutet, sowie deren kernalkylierte und kernhalogenierte Derivate, z. B.

Hydrochinon,
Resorcin,
Dihydroxydiphenyle,
Bis-(hydroxyphenyl)-alkane,
Bis-(hydroxyphenyl)-cycloalkane,
Bis-(hydroxyphenyl)-sulfide,
Bis-(hydroxyphenyl)-ether,
Bis-(hydroxyphenyl)-ketone,
Bis-(hydroxyphenyl)-sulfoxide,
Bis-(hydroxyphenyl)-sulfone und
α, α'-Bis-(hydroxyphenyl)-diisopropylbenzole,

sowie deren kernalkylierte und kernhalogenierte Verbindungen, insbesondere z. B. Bisphenol A = 2,2-Bis-(4-hydroxyphenyl)-propan, Tetramethylbisphenol A, 1,1-Bis-(4-hydroxyphenyl)-isobutan, 1,1-Bis-(4-hydroxyphenyl)-cyclohexan, 4,4'-Dihydroxydiphenylsulfid, 4,4'-Dihydroxydiphenyl, 4,4'-Dihydroxydiphenylsulfon sowie deren di- und tetrahalogenierte Derivate. Besonders bevorzugt ist Bisphenol A. Es

können auch beliebige Mischungen der vorgenannten Diphenole verwendet werden.

Als Dicarbonsäuren für die erfindungsgemäßen aromatischen Polyestercarbonate sind u. a. zu nennen :

Terephthalsäure,
Isophthalsäure,
o-Phthalsäure,
Diphenyl-dicarbonsäure,
Diphenylether-dicarbonsäure,
Naphthalindicarbonsäure und deren Gemische.

Die durchschnittliche Länge der in der ersten Stufe erhaltenen oligomeren aromatischen Esterblöcke kann durch Wahl des Molverhältnisses von Dicarbonsäure-(ester) zu Diphenol gesteuert werden. Bei den nach dem erfindungsgemäßen Verfahren hergestellten Esterblöcken liegt das Verhältnis der bi eden Ausgangskomponenten im Bereich 1 :1,01 bis 1 :100, vorzugsweise 1 :1,05 bis 1 :30. Der Gehalt an Carbonat in den oligomeren Esterblöcken der ersten Stufe kann 90 Mol-% erreichen (bezogen auf die Summe von Carbonester und Carbonat). Das Zahlenmittel des Molekulargewichtes der Oligoesterblöcke $\bar{M}_n$ liegt vorzugsweise im Bereich von 1 000 bis 8 000.

Die Ester- und Carbonatstrukturen in der ersten Stufe können sowohl Block- als auch statistische Verteilung haben.

Die erfindungsgemäßen aromatischen Polyestercarbonate besitzen relative Lösungsviskositäten von vorzugsweise 1,2 bis 1,5 (gemessen an einer Lösung von 0,5 g Polyestercarbonat in 100 ml $CH_2Cl_2$-Lösung bei 25 °C) und einen Gehalt an Estergruppen, bezogen auf die Summe von Ester- und Carbonatgruppen, von vorzugsweise 42 bis 74 Mol-%.

Die erfindungsgemäß hergestellten aromatischen Polyestercarbonate können Stabilisatoren, Fließmittel, Weichmacher, Entformungsmittel, Verstärkungs- und Füllstoffe, z. B. Glasfasern, Glaskugeln, Asbest- und Kohlenstoffasern, Kieselgur, Kaolin, Kreide, Gesteinsmehl sowie Pigmente enthalten.

Die gemäß der Erfindung hergestellten aromatischen Polyestercarbonate können nach üblichen Verfahren in Spritzgußmaschinen zu Formkörpern oder in Extrudern zu Halbzeug verarbeitet werden.

Die Formmassen finden vorzugsweise überall dort Anwendung, wo hinsichtlich Eigenfarbe, Transparenz, Hydrolysefestigkeit, Wärmeformbeständigkeit und Stabilität gegen oxidativen Abbau besonders hohe Anforderungen an die Formteilqualität gestellt werden.

## Beispiele

### Beschreibung der Methode zur Messung der Farbzahl

### Spektroskopische Farbzahlbestimmung

Granulat des aromatischen Polyesters, dessen Farbzahl bestimmt werden soll, wird in Dichlormethan gelöst (Konzentration 4 g/100 ml). Die Messungen werden in einer Schichtdicke von 10 cm ausgeführt.

Vergleichend gegen reines Dichlormethan wird die Lichttransmission I bei einer Wellenlänge von 420 nm und die Lichttransmission $I_o$ bei einer Wellenlänge von 700 nm gemessen. Die Farbzahl des Granulats, gemessen bei 420 nm, errechnet sich nach der Gleichung :

$$FZ_{(420\ nm)} = 11{,}5 \times 10\ g\ I_o / I$$

### Bestimmung der Thermostabilität

Ca. 3 g des granulierten Polyestercarbonates werden in einem 100-ml-Glaskolben im Vakuum von 20 mbar in ein Salzbad von 330 °C getaucht (bis zum Ansatz des Halses), nach dem Aufschmelzen 15 min. so belassen, dann der Kolben aus dem Bad gezogen und die Substanz im Vakuum abkühlen gelassen. Die Veränderung der relativen Lösungsviskosität bei dieser Temperatur der Schmelze ist ein Maß für die Thermostabilität der Probe. Weiterhin wurde der thermisch-oxidative Abbau durch Messung der Kerbschlagzähigkeit von gespritzten Normkleinstäben nach 500 Stunden Lagerung an Luft bei 150 °C bestimmt.

### Bestimmung der Hydrolysefestigkeit

Gespritzte Normkleinstäbe wurden 500 Stunden in siedendem Wasser aufbewahrt und die Hydrolysefestigkeit durch Veränderung der Kerbschlagzähigkeit beurteilt.

Für die Untersuchungen wurden technische Iso- und Terephthalsäure verwendet. Als Bisphenol A wurde technische Ware der Bayer AG eingesetzt.

Aus den Dicarbonsäuren wurden gemäß DE-OS-30 40 294 durch Erhitzen mit überschüssigem $SOCl_2$ die entsprechenden Säuredichloride hergestellt. Die Dicarbonsäuredichloride wurden einerseits als

Rohprodukte — sogleich nach Abdestillation des überschüssigen $SOCl_2$ — andererseits nach Destillation eingesetzt.

Vergleichsbeispiel 1

Aromatisches Polyestercarbonat mit 70 Mol-% Esteranteil aus rohen Dicarbonsäuredichloriden

In einen Stahlkessel mit intensiv wirkendem Rührer wurden unter Stickstoffatmosphäre 2,736 kg Bisphenol A (BPA), 1,5 l 45 gew.-%ige wäßrige Natronlauge, 8,4 g Natriumborhydrid, 36 l Wasser und 22 l Dichlormethan gefüllt und das Gemisch bis zur vollständigen Lösung des BPA gerührt.

In das intensiv gerührte Zweiphasengemisch wurde dann unter Wasserkühlung innerhalb 15 min. eine Lösung aus je 852,72 g rohem Iso- und Terephthalsäuredichlorid, gelöst in 3 l Dichlormethan, gegeben und 1 Stunde nachgerührt. Die Temperatur des Reaktionsgemisches überstieg dabei nicht 22 °C. Durch Zugabe von Natriumhydroxid wurde der pH-Wert des Gemisches bei 12 bis 13 gehalten.

Nach Zugabe von 86,6 g (3,5 Mol %) p-Isooctylphenol und dessen Lösung im Reaktionsgemisch erfolgte unter fortgesetztem Rühren die Einleitung von 600 g Phosgen innerhalb von 20 min., wobei die Temperatur wieder bei ca. 20 °C und der pH-Wert bei 10 bis 12 gehalten wurden. Dann wurden 120 g Triethylamin zugesetzt und noch 1 Stunde nachgerührt.

Nach Abtrennung der wäßrig-alkalischen Phase wurde die organische Phase zunächst mit verdünnter Phosphorsäure, dann mit Wasser salzfrei gewaschen und ca. 50 % des Dichlormethans unter Normaldruck abdestilliert. Die verbliebene Lösung wurde mit 15 l Chlorbenzol verdünnt und die Abdestillation des Dichlormethans fortgesetzt, bis die Sumpftemperatur ca. 80 °C betrug, das Polyestercarbonat sodann im Vakuumextruder bei 320 °C vom Chlorbenzol befreit, als Strang abgezogen und granuliert. Das Granulat besaß eine relative Lösungsviskosität $\eta_{rel}$ von 1,268.

Vergleichsbeispiel 2

Aromatisches Polyestercarbonat mit 30 Mol-% Esteranteil aus rohen Dicarbonsäuredichloriden

Wie bei Vergleichsbeispiel 1 beschrieben, wurden 2,736 kg BPA, 1,5 l 45 gew.-%iger Natronlauge, 8,4 g Natriumborhydrid, 36 l Wasser und 22 l Dichlormethan im Stahlkessel bis zur Lösung des BPA gerührt.

In das kräftig gerührte Zweiphasengemisch wurden dann innerhalb 15 Minuten eine Lösung aus je 365,46 g Iso- und Terephthalsäurechlorid, gelöst in 3 l Dichlormethan und nach 10 Min. 1 450 g Phosgen eingeleitet, wobei die Temperatur des Gemisches 22 °C nicht überschritt und der pH-Wert bei 12 bis 13 lag (Kühlung, Zusatz von Natriumhydroxid).

Der Dosierung der Säurechloride schloß sich die Zugabe von 86,6 g p-Isooctylphenol, nach dessen Lösung die Zugabe von 120 ml einer 4 gew.-%igen wäßrigen Lösung von Triethylamin an, worauf noch 1 Stunde kräftig nachgerührt wurde.

Die Aufarbeitung des Ansatzes erfolgte wie bei Vergleichsbeispiel 1 beschrieben. Das erhaltene Granulat besaß eine relative Lösungsviskosität $\eta_{rel}$ von 1,271.

Vergleichsbeispiel 3

Polyestercarbonat wie bei Vergleichsbeispiel 1, jedoch mit destillierten Dicarbonsäuredichloriden.

Die relative Lösungsviskosität des erhaltenen Produktes betrug 1,273.

Vergleichsbeispiel 4

Polyestercarbonat wie bei Vergleichsbeispiel 2, jedoch mit destillierten Dicarbonsäuredichloriden.

Die relative Lösungsviskosität des erhaltenen Produktes lag bei 1,269.

Beispiel 1 (erfindungsgemäß)

Aromatisches Polyestercarbonat mit 70 Mol-% Esteranteil aus technischen Dicarbonsäuren

2 736 g Bisphenol A (12 Mol), je 698 g Iso- und Terephthalsäure (je 4,2 Mol), 3 770 g Diphenylcarbonat (17,6 Mol) und je 1 g Na-Phenolat und Imidazol wurden unter Rühren 1 Stunde auf 200 °C erhitzt, dann Vakuum von 800 mbar angelegt und das entstehende Phenol abdestilliert. Als unter diesen Bedingungen kein Phenol mehr überging, wurde ein Vakuum von 20 mbar angelegt und die Temperatur auf 230 °C angehoben, bis auch hierbei kein Phenol mehr destillierte. Die Destillation des restlichen Phenols erfolgte bei ca. 1 mbar und 250 °C. Die erhaltene Schmelze wurde dann unter $N_2$ auf Bleche gegossen und abgekühlt. Die gesamte Umsetzung dauerte 7,5 Stunden.

Das erhaltene fast farblose, spröde Material wurde in 22 1 Dichlormethan gelöst und in dem für Vergleichsbeispiel 1 verwendeten Stahlkessel 36 l Wasser, 8,4 g Na-Borhydrid, 120 g Triethylamin und 0,5 l 45 gew.-%iger wäßriger NaOH zugesetzt. Unter kräftigem Rühren wurden innerhalb von 20 min. 600 g Phosgen eingeleitet, dann 43,8 g p-Isooctylphenol zugesetzt und noch 1 Stunde nachgerührt. Die Temperatur des Reaktionsgemisches lag während dieser Zeit bei 20 bis 22 °C. Der pH-Wert wurde durch Zusatz von verdünnter NaOH bei 10 bis 12 gehalten.

Die Aufarbeitung des Ansatzes erfolgte wie für Vergleichsbeispiel 1 beschrieben. Das Produkt besaß eine relative Lösungsviskosität von 1,275.

Beispiel 2 (erfindungsgemäß)

Aromatisches Polyestercarbonat mit 70 Mol-% Esteranteil auf Basis der destillierten Diphenylester von Iso- und Terephthalsäure

Wie bei Beispiel 1 beschrieben, wurden 2 736 g Bisphenol A, je 1 337 g Iso- und Terephthalsäurediphenylester und je 1 g Na-Phenolat und $(BuO)_2$ SnO umgesetzt und das erhaltene Vorkondensat anschließend nach dem Phasengrenzflächenverfahren weiterverarbeitet. Das erhaltene Material zeigte einen η rel-Wert von 1,268.

Beispiel 3 (erfindungsgemäß)

Aromatisches Polyestercarbonat mit 30 Mol-% Esteranteil aus technischen Dicarbonsäuren

2 736 g Bisphenol A (12 Mol), je 299 g Iso- und Terephthalsäure (je 1,8 Mol), 1 628 g Diphenylcarbonat (7,6 Mol) und 1 g Ti $(OBu)_4$ wurden, wie bei Beispiel 1 beschrieben, zu einem fast farblosen Vorkondensat umgesetzt. Das bei der anschließenden Weiterverarbeitung nach dem Phasengrenzflächenverfahren erhaltene Polyestercarbonat besaß eine relative Lösungsviskosität von 1 270.

Beispiel 4 (erfindungsgemäß)

Aromatisches Polyestercarbonat mit 30 Mol-% Esteranteil auf Basis der destillierten Diphenylester von Iso- und Terephthalsäure

Wie für Beispiel 3 beschrieben, wurden 2 736 g Bisphenol A, je 573 g Iso- und Terephthalsäurediphenylester und je 1 g Na-Phenolat und $(BuO)_2$ SnO umgesetzt und das erhaltene Vorkondensat anschließend nach dem Phasengrenzflächenverfahren weiterverarbeitet.

An dem Produkt wurde ein η rel-Wert von 1 264 gemessen.

(Siehe Tabelle 1 Seite 7 f.)

Tabelle 1 : Eigenschaften der hergestellten Polyestercarbonate

| Produkt von | $\eta$ rel 1) | Kerbschlagzähigkeit kJ/m² 2) | Farbzahl | Thermostabilität $\eta$ rel nach Erhitzen der Schmelze | $a_k$ nach 500 Std. Lagerung an Luft bei 150°C kJ/m² | $a_k$ nach 500 Std. Lagerung in Wasser bei 100°C kJ/m² |
|---|---|---|---|---|---|---|
| Vergl.-Bsp. 1 | 1.268 | 23,4 | 16,8 | 1,235 | 5,9 | 5,3 |
| 2 | 1,271 | 34,7 | 17,3 | 1,226 | 8,5 | 4,1 |
| 3 | 1,269 | 25,5 | 13,7 | 1,253 | 6,1 | 5,1 |
| 4 | 1,264 | 36,8 | 13,6 | 1,247 | 8,9 | 6,4 |
| Beispiel 1 | 1,275 | 24,4 | 12,2 | 1,268 | 18,0 | 14,1 |
| Beispiel 2 | 1,268 | 25,3 | 7,5 | 1,263 | 19,3 | 16,5 |
| Beispiel 3 | 1,270 | 36,8 | 8,7 | 1,264 | 22,2 | 18,0 |
| Beispiel 4 | 1,264 | 37,5 | 5,9 | 1,263 | 23,5 | 19,3 |

1) $\eta$ rel = relative Lösungsviskosität, gemessen an einer Lösung von 0,5 g Polyestercarbonat in 100 ml $CH_2Cl_2$-Lösung bei 25 °C

2) Kerbschlagzähigkeit $a_k$ bestimmt gemäß DIN 53 453.

**Patentanspruch**

Verfahren zur Herstellung von aromatischen Polyestercarbonaten mit relativen Lösungsviskositäten von 1,15 bis 3,0 (gemessen an einer Lösung von 0,5 g Polyestercarbonat in 100 ml $CH_2Cl_2$-Lösung bei 25 °C) und mit einem Gehalt an Estergruppen, bezogen auf die Summe von Ester- und Carbonatgruppen, von 7 bis 86 Mol-%, dadurch gekennzeichnet, daß man in einer ersten Stufe Diarylester aromatischer Dicarbonsäuren (oder Gemische aus aromatischen Dicarbonsäuren und Diarylcarbonat) und gegebenenfalls zusätzlich Diarylcarbonat mit 1,01 bis 100 Mol eines Diphenols (pro Mol Diarylester) in der Schmelze gegebenenfalls in Anwesenheit von Katalysatoren, Kettenabbrechern und/oder Verzweigungsmitteln umsetzt, bis ein Oligomeres mit Hydroxylendgruppen, einem Molekulargewicht von 650 bis 25 000 und einem Carbonatgruppengehalt, bezogen auf die Summe von Ester- und Carbonatgruppen, von bis zu 90 Mol-% entstanden ist, und dann in einer zweiten Stufe das Oligomere nach dem Phasengrenzflächenverfahren in Gegenwart tertiärer Amine und/oder quatärer Ammoniumsalze, gegebenenfalls nach Zugabe von Kettenabbrechern und/oder Verzweigungsmitteln, mit Phosgen, gegebenenfalls unter Zusatz von weiterem Diphenol und/oder Dicarbonsäuredichlorid, zum aromatischen Polyestercarbonat kondensiert.

**Claim**

Process for the production of aromatic polyester carbonates with relative solution viscosities of 1.15 to 3.0 (measured using a solution of 0.5 g of polyester carbonate in 100 ml of a $CH_2CL_2$ solution at 25 °C) and with a content of ester groups, based on the sum of ester and carbonate groups, of 7 to 86 mole %, characterised in that, in a first stage, diaryl esters of aromatic dicarboxylic acids (or mixtures of aromatic dicarboxylic acids and diaryl carbonate) and, optionally, additionally diaryl carbonate are reacted with 1.01 to 100 moles of a diphenol (per mole of diaryl ester) in the melt, optionally in the presence of catalysts, chain stoppers and/or branching agents, until an oligomer having hydroxyl end groups, a molecular weight of 650 to 25 000 and a carbonate group content, based on the sum of ester and carbonate groups, of up to 90 mole %, has been formed, and then, in a second stage, the oligomer is condensed with phosgene, by the phase boundary process in the presence of tertiary amines and/or quaternary ammonium salts, optionally after the addition of chain stoppers and/or branching agents, and optionally with the addition of further diphenol and/or dicarboxylic acid dichloride, to give the aromatic polyester carbonate.

**Revendication**

Procédé de production de polyestercarbonates aromatiques ayant des viscosités relatives en solution de 1,15 à 3,0 (mesurées sur une solution de 0,5 g de polyestercarbonate dans 100 ml de solution chlorométhylénique à 25 °C) et une teneur en groupes ester, rapporté à la somme de groupes ester et de groupes carbonate, de 7 à 86 moles %, caractérisé en ce qu'on fait réagir dans une première étape des esters diaryliques d'acides dicarboxyliques aromatiques (ou des mélanges d'acides dicarboxyliques aromatiques et de carbonate de diaryle) et en outre, le cas échéant, un carbonate de diaryle avec 1,01 à 100 moles d'un diphénol (par mole d'ester de diaryle) à l'état fondu, éventuellement en présence de catalyseurs, d'agents de terminaison de chaîne et/ou d'agents de ramification, jusqu'à ce que soit formé un oligomère porteur de groupes terminaux hydroxyle, ayant un poids moléculaire de 650 à 25 000 et une teneur en groupes carbonate, par rapport à la somme des groupes ester et carbonate, allant jusqu'à 90 moles %, puis on condense l'oligomère dans une seconde étape par le procédé à l'interface entre phases en présence d'amines tertiaires et/ou de sels d'ammonium quaternaire, éventuellement après addition d'agents de terminaison de chaîne et/ou d'agents de ramification, avec le phosgène, en ajoutant éventuellement du diphénol et/ou du dichlorure d'acide dicarboxylique, pour former le polyestercarbonate aromatique.